# Europäisches Patentamt

## European Patent Office
## Office européen des brevets

(19)

(11) Veröffentlichungsnummer: **0 033 021**
**B1**

(12)

# EUROPÄISCHE PATENTSCHRIFT

(45) Veröffentlichungstag der Patentschrift:
19.10.83

(51) Int. Cl.³: **C 21 B  13/08**

(21) Anmeldenummer: **80201078.5**

(22) Anmeldetag: **13.11.80**

(54) **Verfahren zur Direktreduktion eisenoxidhaltiger Materialien im Drehrohrofen.**

(30) Priorität: **23.01.80 DE 3002225**

(43) Veröffentlichungstag der Anmeldung:
**05.08.81 Patentblatt 81/31**

(45) Bekanntmachung des Hinweises auf die Patenterteilung:
**19.10.83 Patentblatt 83/42**

(84) Benannte Vertragsstaaten:
**AT BE DE FR GB IT**

(56) Entgegenhaltungen:
**DE-B-1 272 324**
**DE-C-488 615**
**DE-C-831 402**
**FR-A-1 365 441**
**GB-A-1 031 228**
**US-A-1 338 439**
**US-A-1 558 262**
**US-A-2 964 308**

(73) Patentinhaber: **METALLGESELLSCHAFT AG,**
**Reuterweg 14 Postfach 3724, D-6000 Frankfurt/M.1 (DE)**

(72) Erfinder: **Elsenheimer, Gerd, Paul-Ehrlich-Strasse 12,**
**D-6000 Frankfurt am Main 70 (DE)**
Erfinder: **Schnabel, Wolfgang, Dr. Dipl.-Ing.,**
**Goethestrasse 7, D-6234 Hattersheim (DE)**

(74) Vertreter: **Fischer, Ernst, Dr., Reuterweg 14,**
**D-6000 Frankfurt am Main 1 (DE)**

Verfahren zur Direktreduktion eisenoxidhaltiger Materialien im Drehrohrofen

Die Erfindung betrifft ein Verfahren zur Direktreduktion eisenoxidhaltiger Materialien mittels fester kohlenstoffhaltiger Reduktionsmittel unterhalb des Schmelzpunktes in einem Drehrohrofen, wobei das eisenoxidhaltige Material und kohlenstoffhaltiges Reduktionsmittel vor dem Einsatz in den Drehrohrofen in einem Mehretagenofen unter zumindestens teilweiser Verkokung bzw. Schwelung des Reduktionsmittels aufgeheizt werden.

Bei der Verwendung von festen Reduktionsmitteln mit einem sehr hohen Anteil an flüchtigen Bestandteilen, wie z. B. Lignite oder Braunkohlen, entstehen große Gasmengen im Drehrohrofen. Diese Gasmenge wird noch erhöht, wenn das Reduktionsmittel oder das eisenoxidhaltige Material Feuchtigkeit enthält. Diese große Gasmenge bewirkt eine hohe Strömungsgeschwindigkeit der Ofenatmosphäre. Da bei einem im Gegenstrom zwischen Ofenatmosphäre und Beschickung betriebenen Drehrohrofen die Gasgeschwindigkeit am Beschickungsende am höchsten ist, wird vom Abgas, insbesondere beim Einsatz von feinkörnigen Erzen und Reduktionsmitteln mit größerem Anteil an Feinkorn, eine beträchtliche Menge von feinkörnigen Stoffen mitgerissen. Dadurch wird eine Nachverbrennung der im Abgas noch enthaltenen brennbaren flüchtigen Bestandteile erschwert. Eine solche Nachverbrennung ist jedoch in den Fällen aus wärmeökonomischen Gründen notwendig, wenn die Menge der brennbaren flüchtigen Bestandteile so groß ist, daß sie den Wärmebedarf des Drehrohrofens beträchtlich übersteigt. Außerdem ist der Drehrohrofen ein relativ schlechtes Wärmeübertragungsaggregat, so daß die Aufheizzone relativ lang ist. Dies trifft auch in den Fällen zu, wo Pellets oder Stückerze in den Drehrohrofen eingesetzt werden.

Aus der DE-OS 2 741 216 ist es bekannt, feinkörnige Eisenerze zusammen mit festem Reduktionsmittel als Gemisch vor dem Einsatz in den Drehrohrofen in einem Mehretagenofen auf eine Temperatur aufzuheizen, bei welcher eine zumindestens teilweise Verkokung bzw. Teilverbrennung des Reduktionsmittels eintritt, wobei die Schwelgase die erforderliche Wärme liefern. Dabei können örtliche Überschreitungen der maximal zulässigen Temperatur eintreten und Versinterungen auftreten, der Einsatz von bakkenden Kohlen ist nicht möglich, und es erfolgt eine Teilreduktion des Erzes, so daß Ansatzbildungen auftreten können. Ein Einsatz von Stückerz oder Pellets würde infolge der Teilreduktion zu Zerfallserscheinungen führen.

Der Erfindung liegt die Aufgabe zugrunde, die erwähnten Nachteile zu vermeiden und eine Vorwärmung von eisenoxidhaltigen Stoffen unter Ausnutzung von brennbaren flüchtigen Bestandteilen von festen Reduktionsmitteln in wirtschaftlicher Weise zu ermöglichen.

Die Lösung dieser Aufgabe erfolgt erfindungsgemäß dadurch, daß das eisenoxidhaltige Material im oberen Teil des Mehretagenofens vorgewärmt wird, das feste, kohlenstoffhaltige Reduktionsmittel separat im unteren Teil des Mehretagenofens vorgewärmt, und mindestens ein Teil der Schwelgase aus dem unteren Teil im oberen Teil im Gegenstrom zu dem eisenoxidhaltigen Material geführt werden.

Das eisenoxidhaltige Material wird auf den ersten Herd des oberen Teiles des Mehretagenofens aufgegeben, wandert von Etage zu Etage bis zum letzten Herd des oberen Teils, wird von diesem abgezogen und in den Drehrohrofen chargiert. Außer Feinerzen — für die das Verfahren besonders geeignet ist — können auch Pellets oder Stückerze eingesetzt werden. Das feste Reduktionsmittel wird auf den ersten Herd des unteren Teiles des Mehretagenofens aufgegeben und entsprechend vom letzten Herd abgezogen und in den Drehrohrofen chargiert. Als festes Reduktionsmittel können alle Kohlen mit genügendem Gehalt an flüchtigen Bestandteilen, auch backende Kohlen, verwendet werden. Bei backenden Kohlen können entstandene Kohlenagglomerate nach dem Verlassen des Herdofens zerkleinert werden. Die für die Schwelung des Reduktionsmittels erforderlichen Gase — im allgemeinen Luft — werden in die unteren Etagen des unteren Teiles des Mehretagenofens eingeleitet und strömen von Etage zu Etage bis zum ersten Herd des unteren Teiles des Mehretagenofens. Die Einleitung erfolgt vorzugsweise in Form von Teilströmen in mehrere Etagen. Ein geringer Teilstrom des Gases kann in die unterste Etage eingeleitet werden. Von dem heißen Schwelgas der ersten Etage des unteren Teiles des Mehretagenofens wird so viel in die letzte Etage des oberen Teiles des Mehretagenofens eingeleitet, daß im oberen Teil die zur Aufheizung des eisenoxidhaltigen Materials erforderliche Wärmemenge vorhanden ist. Falls dazu nicht das gesamte Schwelgas erforderlich ist, wird der restliche Teil aus der ersten Etage des unteren Teiles des Mehretagenofens abgezogen und für andere Zwecke ausgenutzt. Im oberen Teil des Mehretagenofens strömen die heißen Schwelgase ebenfalls von Etage zu Etage und werden aus der ersten Etage abgezogen.

Eine vorzugsweise Ausgestaltung besteht darin, daß eine Zwischenverbrennung der Schwelgase vor oder bei ihrem Eintritt in den oberen Teil des Mehretagenofens erfolgt. Dazu kann das gesamte Schwelgas oder ein Teilstrom unter Zusatz von sauerstoffhaltigen Gasen — im allgemeinen Luft — zwischenverbrannt werden. Die Zwischenverbrennung erfolgt so, daß das Schwelgas, das in den oberen Teil des Mehretagenofens geleitet wird, nicht mehr reduzierend auf das eisenoxidhaltige Material wirkt. Diese Zwischenverbrennung kann in der oberen Etage des unteren Teils des Mehretagenofens erfolgen oder in einer zwischengeschalteten Kammer. Dadurch wird ein gutes Reduktionsverhalten in dem Drehrohrofen erzielt und Ansatzbildung weitgehend vermieden. Je nach Zusammensetzung des Schwelgases kann die Zwischenverbrennung auch in der untersten Etage des oberen Teiles des Mehretagenofens erfolgen.

Eine vorzugsweise Ausgestaltung besteht darin, daß die Zwischenverbrennung unter weitgehender Verbrennung der flüchtigen, brennbaren Bestandteile erfolgt. Der in den oberen Teil des Mehretagenofens eingeleitete Schwelgasstrom wird dabei so ausgewählt, daß er nach der Zwischenverbrennung eine Temperatur von etwa 1000 bis 1100°C hat. Dadurch werden besonders gute Betriebsergebnisse erzielt.

Eine vorzugsweise Ausgestaltung besteht darin, daß die Austrittstemperatur des Gases aus dem oberen Teil des Mehretagenofens über der Zündtemperatur des Gases zur Verbrennung restlicher brennbarer Bestandteile unter Luftzusatz gehalten wird. Dadurch ist eine vollständige Ausnutzung des latenten Wärmeinhaltes des Abgases ohne Zufuhr von Fremdwärme möglich.

Die Erfindung wird an Hand eines Versuchsbeispiels näher erläutert.

Der Versuchsherdofen hatte folgende Abmessungen:

| | |
|---|---|
| Höhe | 2,06 m |
| Außendurchmesser | 1,59 m |
| Innendurchmesser | 1,18 m |
| Anzahl der Herde | 7 |
| Aktive Herdfläche | 5,8 m$^2$ |
| Gasabzug an Etagen-Nr. | 1, 3 und 5 |
| Zusatzbeheizung (falls erforderlich) in Etagen | 2 und 4 |

Das verwendete Erz hat folgende Zusammensetzung:

| | |
|---|---|
| Fe$_{gesamt}$ | 66,2% |
| Fe$^{++}$ | 0,7% |
| SiO$_2$ | 3,8% |
| H$_2$O | 5% |

Siebanalyse des Erzes:

| | |
|---|---|
| +1 mm | 3,9% |
| 0,5 bis 1 mm | 18,2% |
| 0,3 bis 0,5 mm | 21,6% |
| 0,2 bis 0,3 mm | 24,7% |
| 0,1 bis 0,2 mm | 20,9% |
| bis 0,1 mm | 10,7% |

Die verwendete Kohle hat folgende Analyse:

| | |
|---|---|
| Feuchtigkeit | 20% |
| C-fix | 49,4% |
| Flüchtige | 36,5% |
| Asche | 14,1% |
| Schwefel | 0,76% |

Siebanalyse der Kohle:

| | |
|---|---|
| +20 mm | 11,7% |
| 15 bis 20 mm | 33,8% |
| 10 bis 15 mm | 40,2% |
| 6 bis 10 mm | 12,9% |
| bis 6 mm | 1,4% |

Auf die erste Etage des Ofens werden 340 kg Erz aufgegeben und aus der dritten Etage mit einer Temperatur von 800°C abgezogen. Auf die vierte Etage werden 230 kg Kohle aufgegeben und aus der siebten Etage mit einer Temperatur von 700°C abgezogen. Beide Materialströme werden nach dem Austrag zusammengemischt und in einen Drehrohrofen aufgegeben.

Verbrennungsluft wird in den Etagen 2, 3, 5 und 6 zugeführt. Ein Teilstrom der in den Etagen 4 bis 7 erzeugten Schwelgase wird in Etage 4 abgezogen und hat etwa die folgende Zusammensetzung:

| | |
|---|---|
| CO$_2$ | 12,4% |
| O$_2$ | 0,5% |
| CO | 6,1% |
| CH$_4$ | 1,6% |
| H$_2$ | 5,7% |
| N$_2$ | 56,3% |
| H$_2$O | 17,8% |

Das Gas hat eine Temperatur von 500°C.

Ein anderer Teilstrom wird in die Etage 3 eingeleitet und dort durch Zumischung von Verbrennungsluft aufgeheizt. Die teilweise ausgebrannten Gase werden weiter auf die Etagen 2 und 1 geleitet und vollständig verbrannt. Gleichzeitig wird das Erz auf eine Temperatur von 800°C aufgeheizt. Das aus Etage 1 mit 600°C austretende Abgas wird mit dem Schwelgas aus Etage 4 gemischt, in Zyklonen gereinigt und in einer Nachbrennkammer vollständig verbrannt.

Die Vorteile der Erfindung bestehen darin, daß feinkörnige, eisenoxidhaltige Materialien, wie Spiralkonzentrate, Ilmenite, Eisensande oder ähnliche Materialien ohne Gefahr der Ansatzbildung verarbeitet werden können, Stückerze oder Pellets ohne größere Zerfallserscheinungen vorgewärmt werden können und zur Vorwärmung in wirtschaftlicher Weise feste Reduktionsmittel mit beliebig hohem Gehalt an flüchtigen Bestandteilen und auch backende Kohlen verwendet werden können.

## Patentansprüche

1. Verfahren zur Direktreduktion eisenoxidhaltiger Materialien mittels fester, kohlenstoffhaltiger Reduktionsmittel unterhalb des Schmelzpunktes in einem Drehrohrofen, wobei das eisenoxidhaltige Material und kohlenstoffhaltiges Reduktionsmittel vor dem Einsatz in den Drehrohrofen in einem Mehretagenofen unter zumindestens teilweiser Verkokung bzw. Schwelung des Reduktionsmittels aufgeheizt werden, dadurch gekennzeichnet, daß das eisenoxidhaltige Material im oberen Teil des Mehretagenofens vorgewärmt wird, das feste, kohlenstoffhaltige Reduktionsmittel separat im unteren Teil des Mehretagenofens vorgewärmt und mindestens ein Teil der Schwelgase aus dem unteren Teil im oberen Teil im Gegenstrom zu dem eisenoxidhaltigen Material geführt werden.

2. Verfahren nach Anspruch 1, dadurch gekennzeichnet, daß eine Zwischenverbrennung der Schwelgase vor oder bei ihrem Eintritt in den oberen Teil des Mehretagenofens erfolgt.

3. Verfahren nach Anspruch 2, dadurch gekennzeichnet, daß die Zwischenverbrennung unter weitgehender Verbrennung der flüchtigen, brennbaren Bestandteile erfolgt.

4. Verfahren nach einem der Ansprüche 1 bis 3, dadurch gekennzeichnet, daß die Austrittstemperatur des Gases über dem oberen Teil des Mehretagenofens über der Zündtemperatur des Gases zur Verbrennung restlicher brennbarer Bestandteile unter Luftzusatz gehalten wird.

## Claims

1. A process of directly reducing iron oxide-containing materials by a treatment with solid carbonaceous reducing agent below the melting point of the charge in a rotary kiln, which comprises preheating the iron oxide-containing material and the carbonaceous reducing agent in a multiple-hearth furnace before they are charged to the rotary kiln and subjecting the reducing agent in the multiple-hearth furnace to an at least partial coking or a low-temperature carbonization, respectively, characterized in that the iron oxide-containing material is preheated in the upper part of the multiple-hearth furnace, the solid carbonaceous reducing agent is separately preheated in the lower part of the multiple-hearth furnace, and at least part of the gases produced by the low-temperature carbonization in the lower part are caused to flow in the upper part in a countercurrent to the iron oxide-containing material.

2. A process according to claim 1, characterized in that the gases produced by low-temperature carbonization supplied to the upper part of the multiple-hearth furnace are subjected to at least partial interstage combustion before or as they enter the upper part of the multiple-hearth furnace.

3. A process according to claim 2, characterized in that the interstage combustion is carried out such that at least a major part of the volatile combustible constituents is burnt.

4. A process according to any of claims 1 to 3, characterized in that the exit temperature of the gas from the upper part of the multiple-hearth furnace is maintained above the ignition temperature of the gas for a combustion of residual combustible constituents with a supply of air.

## Revendications

1. Procédé de réduction directe de matières contenant de l'oxyde de fer au moyen de réducteurs solides contenant du carbone, sous le point de fusion, dans un four tubulaire rotatif, la matière contenant de l'oxyde de fer et le réducteur contenant du carbone étant chauffés avant l'utilisation dans le four tubulaire rotatif, dans un four à plusieurs étages, en subissant une cockéfaction ou une carbonisation lente au moins partielle du réducteur, caractérisé en ce qu'on préchauffe la matière contenant l'oxyde de fer dans la partie supérieure du four à plusieurs étages, en ce qu'on préchauffage le réducteur solide contenant du carbone séparément dans la partie inférieure du four à plusieurs étages et en ce qu'au moins une partie des gaz de la carbonisation lente à la partie inférieure est menée dans la partie supérieure à contre-courant par rapport à la matière contenant l'oxyde de fer.

2. Procédé suivant la revendication 1, caractérisé en ce qu'une combustion intermédiaire des gaz de carbonisation lente est effectuée avant ou lors de l'entrée dans la partie supérieure du four à plusieurs étages.

3. Procédé suivant la revendication 2, caractérisé en ce que la combustion intermédiaire est effectuée en brûlant en majeure partie les composants volatils combustibles.

4. Procédé suivant l'une des revendications 1 à 3, caractérisé en ce que la température de sortie du gaz de la partie supérieure du four à plusieurs étages est maintenue au-dessus de la température d'inflammation des gaz afin de brûler les composants combustibles résiduels par addition d'air.